# EUROPÄISCHE PATENTANMELDUNG

(11) **EP 4 706 857 A2**
(43) Veröffentlichungstag der Anmeldung: **11.03.2026**
(21) Anmeldenummer: 25197002.6
(22) Anmeldetag: 20.08.2025
(51) Int. Cl.: B23D 45/00, B27C 5/00, B27C 5/06, B27F 1/00, B65G 47/252

(54) **VORRICHTUNG UND VERFAHREN ZUM BEARBEITEN VON PROFILEN INSBESONDERE FÜR DEN TÜR-, FENSTER-, ROLLADENKÄSTEN- UND FASSADENBAU**

(30) Priorität: 30.08.2024 DE 102024124911
(71) Anmelder: Thorwesten Maschinenbau GmbH, 59269 Beckum (DE)
(72) Erfinder: Rumpf, Martin, 59269 Beckum (DE)
(74) Vertreter: BSB Patentanwälte Schütte & Engelen Partnerschaft mbB

(57) **Zusammenfassung**

Vorrichtung (1), Verfahren und Verwendung einer Vorrichtung zum Zuschneiden und/oder Bearbeiten von Profilen (2) für den Tür-, Fenster-, Rolladenkästen- und Fassadenbau, mit einem Materialpuffer (101) und einer Profilaufnahme (3), auf welches die zu bearbeitenden Profile aufgelegt werden und welches sich in einer Ebene erstreckt, die durch eine Längsrichtung und eine dazu quer ausgerichtete Querrichtung definiert wird. Die Profile werden mit einem Profiltransport über die Profilaufnahme (3) in Querrichtung zu einem Anschlag transportiert, um das Profil (2) von dem Anschlag aus mit einer Transporteinrichtung in Längsrichtung definiert zu einer Bearbeitungseinrichtung zu transportieren, an der das Profil (2) bearbeitet wird. Die Profile sind langestreckt ausgebildet und erstrecken sich entlang einer Profilachse und weisen ein Querschnittsprofil mit mehreren Längsseiten (51-54) entlang der Profilachse auf. Das Profil (2) wird bei Bedarf mit einer Positioniereinrichtung gedreht und auf eine definierte Längsseite aufgestellt. Die Positioniereinrichtung (70) umfasst einen Positionierarm mit wenigstens einer Greifeinheit mit wenigstens einem Greifelement (73) zum Ergreifen des Profils. Der Positionierarm (71) ist in einer x-Richtung (75) und/oder in einer dazu quer ausgerichteten y-Richtung (76) und/oder in einer quer zur x-Richtung (75) und y-Richtung (76) ausgerichteten z-Richtung (77) verfahrbar.

## Beschreibung

Die vorliegende Erfindung betrifft eine Vorrichtung und ein Verfahren zum Bearbeiten von Profilen insbesondere für den Tür-, Fenster-, Rolladenkästen- und Fassadenbau. Die Vorrichtung kann in einem konkreten Anwendungsfall zum Zuschneiden von Profilen insbesondere für den Tür-, Fenster-, Rolladenkästen- und Fassadenbau und dergleichen mehr vorgesehen sein. Die Vorrichtung kann auch an einem Bearbeitungszentrum eingesetzt oder als Bearbeitungszentrum ausgebildet sein und zusätzlich oder alternativ zum Bearbeiten, wie z.B. Bohren, Fräsen und Verschrauben, der Profile dienen. Obwohl die Erfindung im Folgenden im Wesentlichen mit Bezug auf die Verarbeitung von Profilen für den Tür-, Fenster-, Rolladenkästen- und Fassadenbau beschrieben wird, kann die Erfindung auch bei anderen Profilen eingesetzt werden.

Bei der Bearbeitung von Fenster-, Tür-, Rolladenkästen- und Fassadenprofilen werden typischerweise längliche Profile zugeführt, die beispielsweise eine Länge von 6 m aufweisen können. Typische Breiten und Höhen der Profile liegen zwischen etwa 40 mm und 120 mm. Aber es sind auch andere Abmessungen möglich.

Mit einer Vorrichtung zum Zuschneiden der Profile wird ein langes Profil in Teilstücke entsprechender Länge zersägt. Dabei müssen auch häufig Winkel gesägt werden. Meist werden rotierende Sägeblätter verwendet, die für den Schneidevorgang von unten hochgefahren werden. Anschließend werden diese Profile bearbeitet.

Bei winkeleinstellbaren Maschinen wird vor dem Schneidevorgang das Sägeblatt auf einen entsprechend gewünschten Winkel eingestellt. Typische Winkel zur Längsachse des Profils liegen zwischen 22,5° und 157,5°. Oft werden allerdings auch Winkel von 45°, 90° oder 135° eingestellt.

Die für das Zuschneiden der Profile eingesetzten Zuschnittzentren klemmen das zu schneidende Profil vor dem Sägevorgang, damit sich das Profil während des Sägevorgangs nicht bewegt. Meist werden dazu zwei unterschiedliche Spannsysteme eingesetzt. Ein vertikales Spannsystem fährt vertikal ausgerichtete Klemmbacken von oben auf das Profil, bevor von unten das Sägeblatt hochgefahren wird. Um zusätzlich auch eine mögliche Bewegung des Profils in der Ebene zu vermeiden, werden horizontale Spannbacken eingesetzt, die vor und hinter dem Sägeblatt seitlich gegen das Profil drücken, bevor der Schnitt durchgeführt wird.

Die Profile können ein unterschiedliches Querschnittsprofil aufweisen. Beispielsweise können die Profile im Querschnitt eine L-Form aufweisen oder sie weisen einen grob betrachtet rechteckigen Querschnitt mit verschiedenen Nuten und Aussparungen auf. Auf den Transportpuffer aufgelegte Profile können deshalb beim Transport umfallen oder aufgrund ihrer Form in der gewünschten Orientierung gar keine stabile Lage ermöglichen. Dann muss das Profil in die entsprechende Orientierung gebracht werden, bevor es zum Bearbeitungszentrum verfahren wird. Das Drehen und Ausrichten der Profile erfolgt bisher manuell.

Es sind auch Vorrichtungen bekannt geworden, mit denen Profile auf einem Transportband aufgerichtet bzw. gedreht werden können. So offenbart die DE 10 2016 109 484 A1 eine Vorrichtung und ein Verfahren zum Wenden von Profilen mit zwei möglichen Positionierungen, wobei Rechteck- und Winkelprofile ausgerichtet werden können. Die Profile werden an einer Querfördereinrichtung ausgerichtet, die einer Bearbeitungsmaschine zugeordnet ist. Unterhalb der Bewegungsbahn der auf der Querfördereinrichtung angeordneten Profile ist eine vorwiegend vertikalbewegliche, aus zwei im Winkel von ungefähr 90° angeordneten Schenkeln bestehende Wendestation angeordnet, durch die mittels einer Drehung von ungefähr 90° jeweils ein Profil in eine gewünschte Position bewegbar ist. Die bekannte Vorrichtung kann z.B. im Querschnitt quaderförmige Profile drehen und die schmalere Längsseite aufstellen. Bei komplizierten und nacheinander abwechselnden Querschnittsformen kann es hingegen schwieriger werden. Insbesondere erscheint das Funktionsprinzip der Vorrichtung nicht geeignet, für eine Vielzahl unterschiedlicher Profilformen, sodass eine manuelle Bedienperson oder Kontrolle nötig erscheint.

Es ist deshalb die Aufgabe der vorliegenden Erfindung, eine Vorrichtung zum Bearbeiten von Profilen zur Verfügung zu stellen, welche insbesondere eine flexible Abfolge unterschiedlicher Profile und/oder insbesondere eine flexible Drehung eines Profils ermöglicht.

Diese Aufgabe wird gelöst durch eine Vorrichtung mit den Merkmalen des Anspruchs 1 und durch ein Verfahren mit den Merkmalen des Anspruchs 14 und durch die Verwendung einer Vorrichtung mit den Merkmalen des Anspruchs 23. Bevorzugte Weiterbildungen der Erfindung sind Gegenstand der Unteransprüche. Weitere Vorteile und Merkmale der Erfindung ergeben sich aus der allgemeinen Beschreibung und der Beschreibung der Ausführungsbeispiele.

Eine erfindungsgemäße Vorrichtung dient insbesondere zum Zuschneiden und/oder Bearbeiten von Profilen insbesondere für den Tür-, Fenster-, Rollladenkästen- und Fassadenbau. Die erfindungsgemäße Vorrichtung umfasst wenigstens einen Materialpuffer und eine Profilaufnahme, auf welches die zu bearbeitenden Profile aufgelegt werden. Die Profilaufnahme bzw. der Materialpuffer erstrecken sich in einer Ebene, die durch eine Längsrichtung und eine quer dazu ausgerichtete Querrichtung definiert wird. Die Profile werden mit einem Profiltransport über die Profilaufnahme in Querrichtung zu einem Anschlag transportiert, um das Profil von dem Anschlag aus mit einer Transporteinrichtung in Längsrichtung definiert zu einer Bearbeitungseinrichtung zu transportieren, an der das Profil bearbeitet wird. Die Profile sind langgestreckt ausgebildet und erstrecken sich entlang einer Profilachse und weisen ein Querschnittsprofil mit mehreren Längsseiten entlang der Profilachse auf. Das Profil wird bei Bedarf mit einer Positioniereinrichtung gedreht und auf eine definierte Längsseite aufgestellt. Die Positioniereinrichtung umfasst einen Positionierarm mit wenigstens einer Greifeinheit mit wenigstens einem Greifelement zum Ergreifen des Profils. Besonders bevorzugt ist der Positionierarm in einer x-Richtung und/oder in einer dazu quer ausgerichteten y-Richtung und/oder in einer quer zur x-Richtung und y-Richtung ausgerichteten z-Richtung verfahrbar.

Insbesondere ergreift der Positionierarm der Positioniereinrichtung das Profil von oben. Das bedeutet, dass sich der Positionierarm wenigstens während des Ergreifens und des Drehvorgangs wenigstens im Wesentlichen oberhalb der Ebene der Profilaufnahme befindet.

Die erfindungsgemäße Vorrichtung hat viele Vorteile. Ein erheblicher Vorteil der erfindungsgemäßen Vorrichtung besteht darin, dass das Profil mit der Greifeinheit des Positionierarms gegriffen und bedarfsweise gedreht wird. Dadurch kann eine definierte und auch individuelle Drehung eines Profils erfolgen. Es ist dazu nicht nötig, von unten durch die Profilaufnahme hindurchzugreifen. Das könnte bei komplizierten Profilen schwierig sein und es könnte nicht immer gewährleistet werden, dass eine zuverlässige Drehung des Profils ermöglicht wird.

Insbesondere ist der Positionierarm über jeweils einen Linearantrieb in die X-Richtung, die Y-Richtung und die Z-Richtung verfahrbar. Dadurch kann eine besonders individuelle Bewegung des Positionierarms erfolgen.

In einer bevorzugten Ausgestaltung ist die Greifeinheit um eine Schwenkachse an dem Positionierarm schwenkbar. Insbesondere ist die Greifeinheit an dem Positionierarm schwenkbar aufgenommen, um die Greifeinheit aus unterschiedlichen Richtungen zu einem Profil bewegen zu können. Dabei ist die Greifeinheit vorzugsweise an dem Positionierarm schwenkbar aufgenommen, wobei der Positionierarm insbesondere in wenigstens zwei Raumrichtungen und vorzugsweise in drei Raumrichtungen bewegbar und insbesondere linear bewegbar ist.

In vorteilhaften Ausgestaltungen ist das Profil von oben mit dem Positionierarm ergreifbar. Dazu ist es vorteilhaft, wenn der Positionierarm über Linearantriebe oberhalb der Ebene (Auflageebene, Ebene der Profilaufnahme) verfahrbar ist. Der Positionierarm ist insbesondere mit der Greifeinheit oberhalb der Ebene der Profilaufnahme angeordnet.

Das Profil ist vorzugsweise von einer Längsseite aus mit der Greifeinheit ergreifbar. In bevorzugten Ausgestaltungen ist der Positionierarm mit wenigstens einer Saugereinheit zum Ergreifen ausgerüstet. Dazu kann die Greifeinheit wenigstens eine Saugereinheit umfassen. Eine Saugereinheit kann wiederum eines, zwei oder mehr Saugerelemente aufweisen, die dann insbesondere relativ zueinander im Wesentlichen unbeweglich angeordnet sind und beispielsweise nebeneinander positioniert sind.

In bevorzugten Ausgestaltungen umfasst der Positionierarm genau eine Greifeinheit zum Ergreifen eines Profils. Die Greifeinheit umfasst genau eine Saugereinheit. Das bedeutet, dass der Positionierarm das Profil nicht vollständig umgreifen muss, sondern (nur) von einer Seite aus ergreifen kann.

Möglich ist es aber auch, dass konventionelle Greiferelemente das Profil von zwei oder mehr Seiten erfassen und anschließend drehen. Eine besonders schonende Behandlung wird aber mit einer Saugereinheit erreicht. Eine schonende und die Oberfläche der Profile nicht beschädigende Behandlung ist insbesondere dann sehr wichtig, wenn die Profile im eingebauten Zustand sichtbar sind, was regelmäßig der Fall sein kann.

Vorzugsweise ist der Positionierarm in der Längsrichtung verfahrbar und insbesondere ist der Positionierarm in der Querrichtung verfahrbar. Es ist bevorzugt, dass der Positionierarm in der Höhe verfahrbar ist. Besonders bevorzugt ist der Positionierarm in drei (nahezu oder vollständig) senkrecht zueinander ausgerichteten Richtungen verfahrbar vorgesehen. Dabei entspricht die X-Richtung vorzugsweise im Wesentlichen der Längsrichtung. Vorzugsweise entspricht die Y-Richtung im Wesentlichen der Querrichtung und es ist bevorzugt, dass die Z-Richtung im Wesentlichen der Richtung der Höhe entspricht.

Die X-Richtung und die Y-Richtung sind vorzugsweise im Wesentlichen horizontal oder jedenfalls parallel zu der Oberfläche der Profilaufnahme ausgerichtet. Zur Verstellung des Positionierarms sind insbesondere drei zueinander senkrecht ausgerichtete Linearführungen vorgesehen.

In vorteilhaften Ausgestaltungen ist die Greifeinheit an der Dreheinheit aufgenommen, wobei die Dreheinheit an der Linearführung in Querrichtung aufgenommen ist. Die Linearführung in Querrichtung ist insbesondere mit einer vertikalen Linearführung verstellbar. Die vertikale Linearführung ist insbesondere an einer Linearführung in Längsrichtung verstellbar aufgenommen.

In vorteilhaften Weiterbildungen sind Fixierelemente umfasst, welche das Profil an dem Anschlag insoweit halten, dass das Profil nicht zur Seite (wieder) umfällt.

In bevorzugten Ausgestaltungen ist wenigstens eine Sägeeinrichtung und/oder Fräseinrichtung und/oder Schraubereinrichtung zur Bearbeitung umfasst. Es ist bevorzugt, dass wenigstens ein Entnahmepuffer vorgesehen ist. Dem Entnahmepuffer kann eine Positioniereinrichtung zugeordnet sein, um Profile bedarfsweise vor der Entnahme zu drehen.

In allen Ausgestaltungen kann wenigstens ein Sensor zur Positionserkennung des Profils umfasst sein. Denkbar ist es auch, dass ein Sensor vorgesehen ist, der eine Profilerkennung durchführt. Regelmäßig ist aber die Reihenfolge der aufgelegten Profile bekannt, sodass man dann eine Erkennung des jeweiligen Profils (Profiltyps) nicht erforderlich ist.

Insbesondere sind Vorrichtungen gemäß der Erfindung für Handwerksbetriebe und dergleichen vorgesehen und nicht primär für eine industrielle Verarbeitung von Profilen, können aber auch da eingesetzt werden.

In allen Ausgestaltungen kann es möglich sein, dass eine Klappeneinrichtung umfasst ist, mittels der eine Drehbewegung des Profils über ein (insbesondere schwenkbares) Klappelement unterstützbar ist. Möglich ist es auch, dass die Klappeinrichtung zwei oder mehr Klappelemente umfasst. Solche Klappelemente können beispielsweise von unterhalb der Oberfläche der Profilaufnahme durch die Ebene der Profilaufnahme durchschwenken und eine Drehung des Profils unterstützen. Dann ist es beispielsweise möglich, dass an einem Ende des Profils (oder in der Nähe des Endes des Profils) exakt eine Positioniereinrichtung angeordnet ist, die grundsätzlich für die Drehbewegung des Profils sorgt. In der Mitte des Profils und am anderen Ende des Profils kann beispielsweise jeweils ein Klappelement einer Klappeinrichtung vorgesehen sein. Diese unterstützen die durch die Positioniereinrichtung initiierte Drehbewegung des Profils.

Anders ausgedrückt kann an einem Ende die Positioniereinrichtung mit einem Positionierarm angeordnet sein, während an einer davon (in Längsrichtung) entfernten Stelle an der Profilaufnahme eine Klappeinrichtung mit einem Klappelement angeordnet ist, um die Drehbewegung durch die Positioniereinrichtung zu unterstützen. Dabei ist der Positionierarm der Positioniereinrichtung oberhalb der Oberfläche der Profilaufnahme angeordnet und das Klappelement der Klappeinrichtung ist vor der Drehbewegung des Profils jedenfalls wenigstens teilweise unterhalb der Oberfläche der Profilaufnahme angeordnet. Während der Positionierarm das Profil an einer Längsseite oder von oben (jedenfalls oberhalb der Oberfläche der Profilaufnahme) ergreift, klappt das Klappelement der Klappeinrichtung von einer Position unterhalb der Oberfläche der Profilaufnahme nach oben durch, um die Drehbewegung des Profils zu unterstützen.

In allen Ausgestaltungen ist wenigstens eine Steuereinrichtung vorgesehen, um die Vorrichtung zu steuern.

Das erfindungsgemäße Verfahren dient insbesondere zum Zuschneiden und/oder Bearbeiten von Profilen insbesondere für den Tür-, Fenster-, Rollladenkästen- und Fassadenbau. Bei dem erfindungsgemäßen Verfahren werden die zu bearbeitenden Profile auf eine Profilaufnahme eines Materialpuffers aufgelegt, wobei sich die Profilaufnahme in einer Längsrichtung und einer dazu quer ausgerichteten Querrichtung erstreckt, welche eine Ebene (Ebene der Profilaufnahme) definieren. Die Profile werden mit einem Profiltransport, wie beispielsweise einem Riementrieb oder einem anderen Antrieb, über die Profilaufnahme in Querrichtung zu einem Anschlag transportiert, um das Profil von dem Anschlag aus (danach) mit einer Transporteinrichtung in Längsrichtung definiert zu einer Bearbeitungseinrichtung zu transportieren, an der das Profil dann bearbeitet wird. Beispielsweise kann das Profil dort auf Länge abgeschnitten und gegebenenfalls unter einem entsprechenden Winkel abgetrennt werden. Es werden langgestreckte Profile eingesetzt, die sich entlang einer Profilachse erstrecken und ein Querschnittsprofil mit mehreren Längsseiten entlang der Profilachse aufweisen. Das Profil wird bedarfsweise mit wenigstens einem Greifelement wenigstens einer Greifeinheit des Positionierarms einer Positioniereinrichtung ergriffen und wird mit der Positioniereinrichtung gedreht und auf eine definierte (andere) Längsseite gestellt. Anschließend kann das Profil zu der Bearbeitungseinrichtung transportiert werden.

Vorzugsweise wird eine Drehbewegung des Profils über ein Klappelement unterstützt.

Insbesondere wird der Positionierarm der Positioniereinrichtung beim Drehen des Profils wenigstens zweidimensional verstellt. Besonders bevorzugt wird der Positionierarm der Positioniereinrichtung beim Drehen des Profils in wenigstens zwei Raumrichtungen (mit der Steuereinrichtung gesteuert) aktiv verstellt. Vorzugsweise wird die Greifeinheit des Positionierarms beim Drehen des Profils um eine Schwenkachse an dem Positionierarm verschwenkt.

Besonders bevorzugt wird der Positionierarm beim Drehen derart gesteuert, dass sich das Profil beim Drehen über wenigstens einen wesentlichen Teil des Drehvorgangs und über einen erheblichen Teil der Länge des Profils auf der Unterlage (Oberfläche der Profilaufnahme) abstützt. Dabei kann die Unterlage durch die Oberfläche der Profilaufnahme direkt zur Verfügung gestellt werden oder die Unterlage wird durch das Transportband oder die Transportbänder bereitgestellt, die an der Profilaufnahme zur Förderung der Profile in Querrichtung vorgesehen sind.

Vorzugsweise wird beim Drehvorgang eines Profils die Schwenkachse des Drehvorgangs in wenigstens zwei Raumrichtungen (wenigstens zweidimensional) verändert. Insbesondere wird beim Drehvorgang eines Profils die räumliche Position der Drehachse derart gezielt verändert, dass das Profil beim Drehen mit wenigstens einer Kante auf der Unterlage (bzw. dem Transportband) aufliegt und/oder mit wenigstens einer Kante an dem Anschlag anliegt. Besonders bevorzugt liegt das Profil beim Drehen wenigstens zeitweise mit einer Kante auf der Unterlage bzw. dem Transportband und mit einer anderen Kante an dem Anschlag an. Dadurch wird eine besonders zuverlässige Funktion bereitgestellt. Dadurch, dass das Profil während des Drehvorgangs von der Unterlage und auch an dem Anschlag unterstützt wird, können auch sehr lange Profile mit nur einer Positioniereinrichtung zuverlässig gedreht werden.

Mit einer erfindungsgemäßen Verwendung wird eine Vorrichtung zum Zuschneiden und/oder Bearbeiten von Profilen insbesondere für den Tür-, Fenster-, Rollladenkästen- und Fassadenbau zum Transportieren und Bearbeiten von Profilen verwendet. Dabei weist die verwendete Vorrichtung wenigstens einen Materialpuffer und eine Profilaufnahme auf, auf welche die zu bearbeitenden Profile aufgelegt werden und welche sich in einer Ebene erstreckt, die durch eine Längsrichtung und eine sich dazu quer erstreckende Querrichtung definiert wird. Die Profile werden mit einem Profiltransport über die Profilaufnahme in Querrichtung zu einem Anschlag transportiert, um das Profil vor dem Anschlag von dem Anschlag aus mit einer Transporteinrichtung in Längsrichtung definiert zu einer Bearbeitungseinrichtung zu transportieren, an der das Profil bearbeitet wird. Die Profile sind langgestreckt ausgebildet (das Verhältnis einer maximalen Länge zu einer maximalen Quererstreckung ist insbesondere größer 10) und erstrecken sich entlang einer Profilachse und weisen ein Querschnittsprofil mit mehreren Längsseiten entlang der Profilachse auf. Die Positioniereinrichtung umfasst einen Positionierarm mit wenigstens einer Greifeinheit mit wenigstens einem Greifelement zum Ergreifen des Profils und dreht bedarfsweise das Profil mit der Positioniereinrichtung und stellt es auf eine definierte Längsseite auf.

In bevorzugten Weiterbildungen und weiteren Ausgestaltungen kann eine erfindungsgemäße Vorrichtung weiterhin einzelne oder alle Merkmale aufweisen, die in der DE 10 2007 060 586 A1 und der DE 10 2012 004 861 A1 der Anmelderin beschrieben sind.

Weitere Vorteile und Merkmale der vorliegenden Erfindung ergeben sich aus der Beschreibung der Ausführungsbeispiele und den Figuren, welche mit Bezug auf die beiliegenden Figuren im Folgenden erläutert werden.

In den Figuren zeigen:
- Fig. 1a, 1b: stark schematische Draufsichten auf Bearbeitungszentren gemäß der vorliegenden Erfindung;
- Fig. 1c: verschiedene Profile an dem Anschlag des Transportpuffers des Bearbeitungszentrums;
- Fig. 2a-2e: verschiedene Positionen und Stellungen des Positionierarms und des damit aufgenommenen Profils beim Drehen eines Profils; und
- Fig. 3a-3b: Ansichten des Positionierarms mit unterschiedlichen Profilen, die von unterschiedlichen Seiten aus gegriffen und angehoben werden.

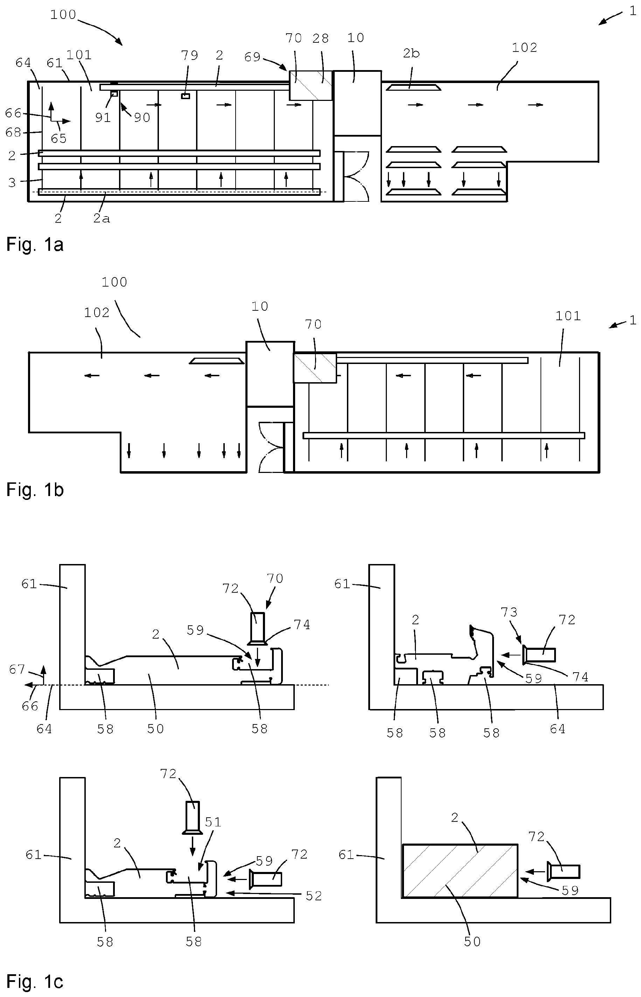

Mit Bezug auf die beiliegenden Figuren werden im folgenden Ausführungsbeispiele der vorliegenden Erfindung erläutert. In Figur 1a ist ein Bearbeitungs- oder Zuschnittzentrum 100 abgebildet, welches zum Bearbeiten und insbesondere zum Zuschneiden von Profilen vorgesehen ist. Das Zuschnittzentrum 100 verfügt über einen vorgeschalteten Materialpuffer 101 und einen nachgeschalteten Entnahmepuffer 102.

Dabei werden die hier in der Regel etwa 6 m langen Profile auf die Profilaufnahme 3 des Materialpuffers 101 aufgebracht und dort mit dem Profiltransport 68 in der Richtung der eingezeichneten Pfeile zu der anderen Seite transportiert, bis sie an einen Anschlag 61 gelangen. Dort werden die Profile 2 mit der in den folgenden Figuren näher erläuterten Positioniereinrichtung 70 bei Bedarf auf eine passende Längsseite gedreht bzw. aufgestellt. Anschließend wird das Profil 2 in der Längsrichtung 65 der Bearbeitungseinrichtung bzw. Schneideinrichtung 10 transportiert.

Die Profile 2 können aus unterschiedlichen Materialien bestehen. Oftmals bestehen Profile für den Tür-, Fenster-, Rollladenkästen- oder Fassadenbau wenigstens teilweise aus Kunststoff oder Aluminium und/oder Holz.

Die Bearbeitungseinrichtung 10 kann ausgebildet sein, wie sie zum Beispiel in der DE 10 2007 06058 6 A1 oder der DE 10 2012 00486 1 A1 der Anmelderin beschrieben sind.

Die auf die Profilaufnahme 3 aufgelegten Profile 2 erstrecken sich mit ihrer Längsachse 2a in Längsrichtung 65. Nach dem Auflegen werden die Profile 2 einzelnen gezielt in Querrichtung 66 zu dem Anschlag 61 transportiert. Ein Sensor 79 erkennt ein sich näherndes Profils 2, sodass dafür gesorgt werden kann, dass jeweils nur ein einzelnes Profil 2 zu dem Anschlag 61 transportiert wird.

Der Positioniereinrichtung 70 kann eine Transporteinrichtung zum Transport eines Profils 2 in Längsrichtung 65 zugeordnet sein. Denkbar ist es auch, dass die Transporteinrichtung 69 separat ausgebildet ist. Eine Steuereinrichtung 28 kann in der Positioniereinrichtung 70 aufgenommen sein oder ist jedenfalls mit der Positioniereinrichtung 70 und den weiteren Komponenten der Vorrichtung 1 derart verbunden, dass die Steuereinrichtung 28 die gezielte Steuerung der einzelnen Komponenten übernimmt.

In der Bearbeitungseinrichtung 10 wird das Profil 2 bearbeitet und zum Beispiel auf Länge und Gehrung geschnitten. Bearbeitete Profilelemente 2b verlassen die Bearbeitungseinrichtung 10 und werden zu dem Entnahmepuffer 102 transportiert, wo sie in der Ausgestaltung gemäß Figur 1a entgegen der Querrichtung zur Entnahmestelle transportiert werden.

Möglich ist auch ein spiegelbildlicher Aufbau des Bearbeitungszentrums 100, wie es in Figur 1b dargestellt ist. Möglich sind auch weitere Ausgestaltungen, sodass die Profile 2 auf einer Längsseite auf die Profilaufnahme 3 aufgelegt und beispielsweise von der anderen Längsseite nach der Bearbeitung entnommen werden.

Figur 1c zeigt stark schematisiert vergrößerte Ansichten in Längsrichtung 65, wobei sich in der Orientierung von Fig. 1c die Querrichtung 66 nach links und die Höhe 67 nach oben erstreckt.

Dargestellt ist schematisch die Profilaufnahme, die sich in Längsrichtung 65 und Querrichtung 66 erstreckt und eine Ebene (Auflageebene) 64 definiert, auf der Profile 2 angeordnet sind.

Rein schematisch zeigen die vier Abbildungen von Figur 1c vier unterschiedlich geformte Profile 2, die jeweils sehr unterschiedliche Querschnittsprofile 50 aufweisen, um einen Eindruck von den zu verarbeitenden Profile zu vermitteln.

Wird als Bearbeitungseinrichtung 10 beispielsweise eine Schneideinrichtung mit einem Sägeblatt eingesetzt, welches im Ruhezustand unterhalb der Ebene 64 angeordnet ist und sich für den Schneidevorgang nach oben bewegt, so können die Profile 2 unter bestimmten Winkeln abgeschnitten werden. Für bestimmte andere Konstellationen und Winkelschnitte ist dann eine Drehung eines Profils 2 erforderlich, sodass die Profile aus der in Figur 1c abgebildeten liegenden Stellung in einer zum Beispiel rechtwinklig dazu ausgerichtete stehende Stellung überführt werden müssen.

Denkbar wäre es nun, die Profile beim Aufbringen auf die Profilaufnahme direkt "stehend" aufzubringen und stehend in Querrichtung zu dem Anschlag zu transportieren. Das wird mit dem rechts unten in Figur 1c abgebildeten quaderförmigen Querschnittsprofil regelmäßig und zuverlässig funktionieren. Bei den anderen abgebildeten Profilen wird auf den ersten Blick klar, dass ein stehender Transport vielleicht manchmal, aber jedenfalls nicht immer gelingt, ohne das Profil seitlich über Hilfselemente abzustützen. Solche Hilfselemente müssen dann jeweils passend auf die Profilaufnahme aufgelegt werden. Anschließend müssen solche Hilfsteile auf der anderen Seite an dem Anschlag 61 wieder entfernt werden. Das erfordert ein oder zwei Arbeitskräfte und erhöht den Aufwand beträchtlich.

Erfindungsgemäß wird nun das Profil 2 bei Bedarf durch eine Positioniereinrichtung 70 mit einer Greifeinheit 72 gegriffen und aufgestellt. Wie die vier verschiedenen Abbildungen in Figur 1c zeigen, kann die Greifeinheit 72 an unterschiedlichsten Längsseiten 51, 52 des Profils ansetzen, wenn dort eine passende Greiffläche 59 zu Verfügung steht. Eine solche Greiffläche 59 kann dabei auch in Aussparungen oder Nuten 58 vorhanden sein, wie es die beiden linken Abbildungen von Figur 1c zeigen. Dort wäre es alternativ auch möglich, das Profil an der hier rechten Stirnseite bzw. Längsseite 52 zu ergreifen. Oder die Greifeinheit 72 würde das Profil 2 auf der oberen Längsseite auf dem großen flächigen Bereich ergreifen.

In der Abbildung oben rechts in Figur 1c bietet sich die Greiffläche an der rechten Stirnseite an. Die Greifeinheit 72 umfasst in jedem Fall wenigstens ein Greifelement 73, wobei die Greifelemente 73 in vorteilhaften Ausgestaltungen als Saugereinheiten 74 ausgebildet sein können. Eine Greifeinheit 72 kann mehrere Greifelemente 73 wie zum Beispiel Saugerelemente 74 umfassen. Regelmäßig sind die einzelnen Greifelemente 73 einer Greifeinheit 72 aber nicht relativ zueinander (gesteuert) bewegbar. Gegebenenfalls kann jedes einzelne Greifelement durch eine Feder vorbelastet sein.

Möglich ist es auch, dass anstelle von Saugereinheiten 74 konventionelle Greifelemente eingesetzt werden, die über weiche oder elastische Anlageflächen verfügen, um eine Beschädigung der Oberfläche an der Greiffläche 59 zuverlässig zu verhindern. Ein Vorteil von Saugereinheiten 74 ist, dass generell eine Beschädigung der Oberfläche der Grifffläche 59 zuverlässig verhindert wird. Bei den Profilen 2 bilden die Oberflächen oft auch Sichtflächen am fertigen Produkt.

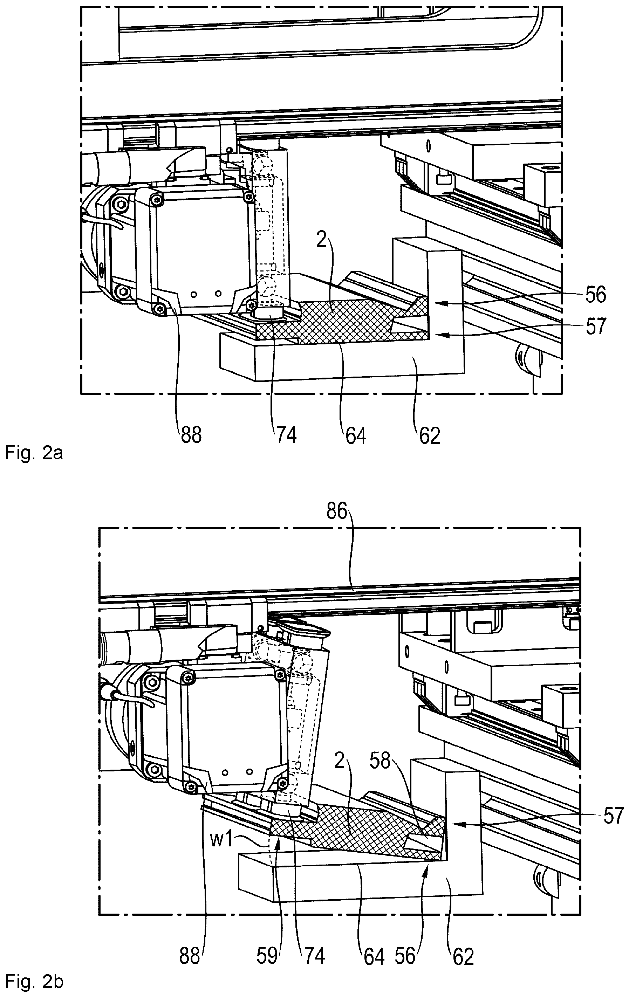

Die Figuren 2a bis 2e zeigen vergrößerte schematische perspektivische Ansichten der Positioniereinrichtung 70 bei der Drehung eines Profils 2 an einem Anschlag 61 auf der Unterlage 62. Dabei sind verschiedene Winkelpositionen des Profils und zugehörige Positionen der Positioniereinrichtung 70 dargestellt.

Figur 2a zeigt das Profil 2, nachdem es auf die Profilaufnahme 3 aufgelegt und in Querrichtung 66 über die Ebene 64 zu dem Anschlag 61 transportiert wurde. Dort liegt nun das Profil 2 an dem Anschlag 61 an und muss für die weitere Bearbeitung gedreht und aufgestellt werden. Dazu wird die Positioniereinrichtung 70 eingesetzt, die über eine X-Verstellung 85 in X-Richtung 75, über eine Y-Verstellung 86 in Y-Richtung 76 und über eine Z-Verstellung in Z-Richtung 77 verfügt.

Dabei ist der Linearantrieb für die Y-Verstellung in Querrichtung 66 ausgerichtet und an dem Linearantrieb der Z-Verstellung 87 aufgenommen, die wiederum vertikal bzw. in der Höhe 67 verstellbar ist. Der Linearantrieb der Z-Verstellung 87 ist hier an der X-Verstellung 85 in X-Richtung bzw. in Längsrichtung 65 aufgenommen. Im Ausführungsbeispiel sind die X-Richtung 75 und die Längsrichtung 65 nahezu oder ganz identisch. Ebenso stimmen die Y-Richtung 76 und die Querrichtung 66 nahezu oder vollständig über ein. Weiterhin ist die Z-Richtung vorzugsweise nahezu oder vollständig vertikal ausgerichtet, ebenso wie die Höhe 67.

Wie in Figur 2a erkennbar, ist an der Y-Verstellung 86 eine Dreheinheit 88 aufgenommen, an der die Greifeinheit 72 mit wenigstens einem Greifelement 73 drehbar bzw. schwenkbar aufgenommen ist. Der Positionierarm 71 kann über diese verschiedenen Verstellmöglichkeiten zu jeder beliebigen Greiffläche 59 verfahren werden und so das Profil 2 beispielsweise an der dargestellten Grifffläche 59 aufnehmen.

Figur 2b zeigt die Positioniereinrichtung 70 mit dem schon um einen Winkel w1 gegenüber der horizontalen Ebene 64 aufgenommenen Profil 2. Dabei wird der Positionierarm 71 über die Y-Verstellung 86 und die Z-Verstellung 87 und die Dreheinheit 88 bewegt. Es erfolgt eine auf das Profil 2 abgestimmte Linear- und Schwenkbewegung, wobei sichergestellt wird, dass über einen wenigstens über einen wesentlichen Teil der Aufrichtbewegung des Profils 2 die Kante 56 des Profils auf der Unterlage 62 aufliegt bzw. sich darauf abstützen kann. Ebenso wird vorzugsweise dafür gesorgt, dass die Kante 57 über einen erheblichen Teil der Aufrichtbewegung des Profils 2 Kontakt mit dem Anschlag 61 hat.

Dadurch kann dafür gesorgt werden, dass sich das Profil entlang seiner Länge (von bis zu 6 m oder mehr) auf dem Untergrund und seitlich an dem Anschlag abstützen kann. Das erleichtert die Aufrichtbewegung und die Zuverlässigkeit der Positionierbewegung erheblich. Außerdem sorgt das dafür, dass im Regelfall eine einzige Positioniereinrichtung ausreicht, um auch lange Profile 2 passend zu orientieren oder aufzurichten.

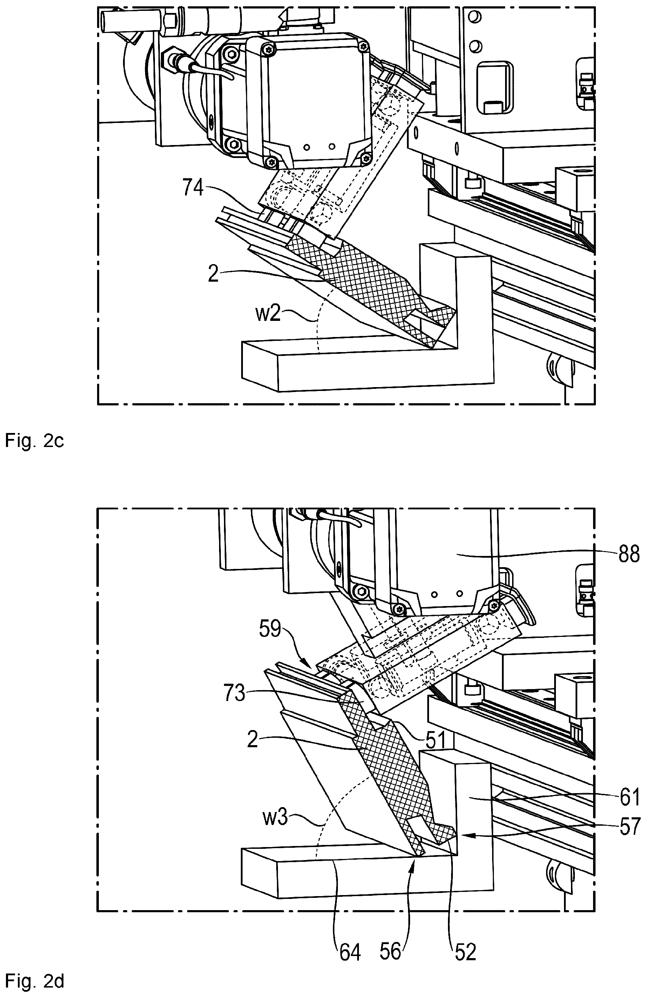

Figur 2c zeigt die Positioniereinrichtung und das schon um einen Winkel w2 von mehr als 30° gedrehte Profil 2, wobei deutlich wird das die Schwenkachse der Dreheinheit 88 in Y-Richtung 76 und auch in Z-Richtung 77 verfahren wird, während das Profil 2 geschwenkt wird.

Figur 2d zeigt die Winkelstellung w3. Der Winkel w3 beträgt hier schon mehr als 60°. Erkennbar ist, dass sich die Profilkanten 56 und 57 jeweils auf der Unterlage 62 bzw. an dem Anschlag 61 abstützen.

In allen Ausgestaltungen und Ausbildungen ist es bevorzugt, dass sich wenigstens eine Kante des Profils über einen Winkelbereich von wenigstens 45° beim Drehvorgang an der Unterlage und/oder dem Anschlag abstützt. Besonders bevorzugt hat eine Kante des Profils über einen Winkelbereich von wenigstens 45° einen abstützenden Kontakt auf der Unterlage 62 und wenigstens eine Kante des Profils hat einen abstützenden Kontakt an dem Anschlag 61, während das Profil 2 beispielsweise aus einer ersten Stellung in eine zweite Stellung überführt wird.

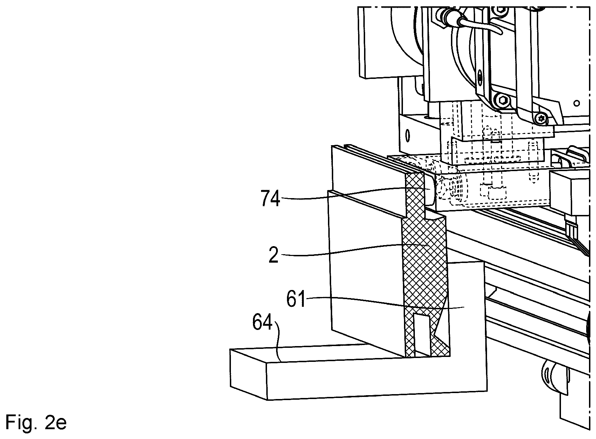

Figur 2e zeigt schließlich die (hier aufgerichtete) Stellung des Profils 2, wobei der Positionierarm 71 das Profil 2 immer noch mit der Greifeinheit 72 gegriffen hat. Dazu ist der Positionierarm 71 mittels der Y-Verstellung 86 und der Z-Verstellung 87 entsprechend verfahren worden und die Dreheinheit 88 hier insgesamt um 90° gedreht worden.

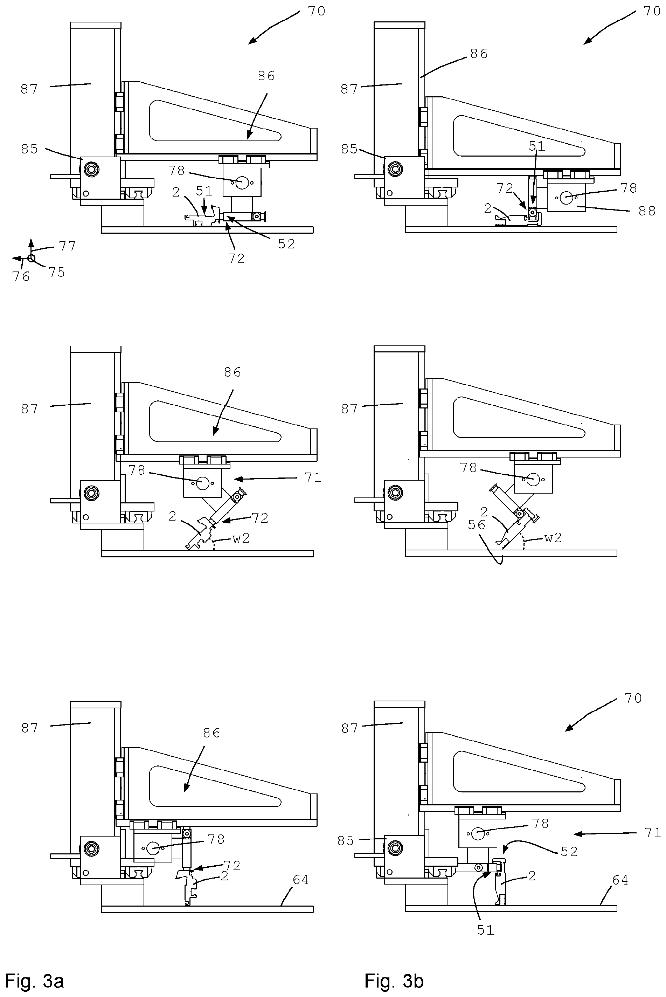

Figuren 3a und 3b zeigen jeweils drei weitere untereinander angeordnete schematische Seitenansichten der Positioniereinrichtung 70 und eines daran aufgenommenen Profils 2 in drei unterschiedlichen Stellungen.

Oben ist jeweils die ursprüngliche liegende Stellung eines Profils 2 abgebildet, nachdem die Greifeinheit 72 das Profil 2 an einer geeigneten Stelle ergriffen hat. In der Mitte ist jeweils eine Stellung unter etwa einem Winkel "w2" abgebildet. Erkennbar ist, dass sich das Profil 2 nach unten auf der Ebene 64 abstützt. Vorzugsweise stützt sich das Profil 2 mit einer anderen Kante an dem hier nicht eingezeichneten Anschlag 61 ab. Jedenfalls findet wenigstens (bei langen Profilen wenigstens) eine Abstützung über einen erheblichen Schwenkbereich des Profils 2 statt, was die Stabilität des Vorgangs erhöht. Unten ist schließlich jeweils eine stehende Position des Profils 2 abgebildet, in welcher die Greifeinheit 72 das Profil 2 noch gegriffen hat und das Profil auf der Unterlage bzw. der Ebene 64 aufsteht.

Insbesondere bei kürzeren und/oder in sich stabileren Profilen kann auch auf eine Schwenk- und/oder Drehbewegung ohne Abstützung ("in der Luft") erfolgen. Eine Abstützung ist dann nicht immer und bei manchen Profilarten nie nötig.

Durch diese Maßnahmen wird eine einfache und unaufwendige Handhabung und Drehung des Profils 2 ermöglicht, wobei unterschiedlich geformte Profile 2 zuverlässig ergriffen und in die gewünschte Orientierung gedreht werden können. Die Schwenk- und Aufrichtbewegung wird unterstützt und ein anschließendes Wiederumfallen des Profils 2 kann verhindert werden. Dazu führt der Positionierarm 71 geeignete (X-,) Y- und Z-Bewegungen und Schwenkbewegungen um die Drehachse 78 aus. Im Regelfall reicht ein einiger Positionierarm 71 aus, um auch mehrere Meter lange Profile 2 zu drehen. Gegebenenfalls ist eine einfache Unterstützung durch einen Klappmechanismus möglich.

In den Figuren 3a und 3b ist das Profil in unterschiedlichen Winkeln gegenüber der Ebene 64 abgebildet.

Die Positioniereinrichtung 70 umfasst den Positionierarm 71, der über die Z-Verstellung 87 in der Höhe verstellbar ist. An der Z-Verstellung 87 ist die Y-Verstellung 86 aufgenommen. Die Z-Verstellung 87 ist wiederum an einer X-Verstellung 85 aufgenommen. Gegebenenfalls ist es auch möglich, auf eine X-Verstellung 85 zu verzichten, wenn das Profil 2 über andere Mittel in X-Richtung (Längsrichtung) transportiert werden kann.

An der Y-Verstellung 86 ist wiederum eine Dreheinheit 88 aufgenommen, an der wiederum wenigstens eine Greifeinheit 72 angeordnet ist, um ein Profil 2 zu ergreifen. Es ist auch möglich, zwei oder mehr Greifeinheiten vorzusehen, sodass ein Profil 2 beispielsweise von zwei gegenüberliegenden Seiten gegriffen werden kann. Hier im Ausführungsbeispiel verfügt die Greifeinheit 72 über eine Saugereinheit 74 als Greifelement 73. Konkret können eine oder mehrere Saugerelemente als Greifelement 73 angeordnet sein, um ein Profil 2 von nur einer definierten Seite 51 oder 52 an einer einzigen Grifffläche 59 (vergleiche Figur 1) zu ergreifen und aufzunehmen. Es hat sich als vorteilhaft herausgestellt, dass eine Saugereinheit 74 zwei und insbesondere drei oder gegebenenfalls vier oder mehr (parallel oder benachbart angeordnete) Saugerelemente als Greifelemente 73 umfasst.

In Figur 3a oben wird das Profil 2 von der hier rechten Seitenfläche 52 bzw. Stirnfläche mit der Greifeinheit 72 ergriffen, um es anschließend aufzunehmen und um hier 90° zu drehen.

Figur 3a zeigt in der mittleren Abbildung eine andere Stellung, in der das Profil 2 schon von der Ebene 64 aufgenommen wurde und etwas angehoben wurde. Dazu wurde die Y-Verstellung 86 verstellt. Ebenso wurde die Z-Verstellung 87 in der Höhe verstellt. Außerdem wurde die Dreheinheit 88 um die Drehachse 78 gedreht.

Die entsprechenden Positionierungen der Linearantriebe bzw. X-,Y-Z-Verstellungen 85-87 und der Dreheinheit 88 werden von der Steuereinrichtung anhand des Profiltyps vorgegeben oder berechnet.

Möglich ist der Einsatz einer hier nicht dargestellten und optionalen Klappeinrichtung, die hier über wenigstens ein Klappelement oder Fixierelement verfügt, welches von einer unterhalb der Ebene 64 angeordneten Stellung in eine wenigstens teilweise auch oberhalb der Ebene 64 angeordnete Stellung klappbar ist.

Die Klappeinrichtung ist dann vorzugsweise in X-Richtung 75 (hier gleich Längsrichtung 65) erheblich von der Positioniereinrichtung 70 entfernt. Beispielsweise beträgt ein Abstand in Längsrichtung 1 m, 2 m oder 3 m oder mehr. Die Klappeinrichtung mit dem einen oder mit den mehreren in Längsrichtung verteilt angeordneten Klappelementen dient zur Unterstützung des Profils 2 bei der Drehbewegung, die durch den Positionierarm 71 der Positioniereinrichtung 70 initiiert und mit der Steuereinrichtung 28 gesteuert wird.

Bei Profillängen von zum Beispiel 6 m kann das die Zuverlässigkeit des Aufrichtens erheblich steigern, sodass keine Kontrollperson mehr nötig ist. Ebenso reicht es aus, nur eine Positioniereinrichtung 70 einzusetzen, was den Aufwand verringert gegenüber zwei oder mehr parallelen Positioniereinrichtungen 70.

Die Klappelemente der Klappeinrichtung sind insbesondere um eine unterhalb der Ebene 64 angeordnete Schwenkachse verschwenkbar. Die Form der Klappelemente kann an eine Außenform oder mehrere Außenformen von Profilen angepasst sein, kann aber auch allgemein gehalten sein.

Figur 3a zeigt in der unteren Darstellung eine schematische Seitenansicht der Positioniereinrichtung 70 und des daran aufgenommenen Profils 2 in der aufgerichteten Stellung. Dazu wurden die Y-Verstellung 86 und die Z-Verstellung 87 gezielt gesteuert derart verfahren, dass das Profil 2 auf der Ebene 64 aufsteht. Das Profil 2 kann an dem hier nicht eingezeichneten Anschlag 61 anliegen.

Klappelemente einer optionalen Klappeinrichtung können um die Schwenkachse gemeinsam verschwenkt worden sein, sodass diese die Schwenk- und Aufrichtbewegung unterstützen und ein anschließendes Wiederumfallen des Profils 2 verhindern.

Figur 3b zeigt drei entsprechende Ansichten für ein anderes Profil 2, welches von einer anderen Seite aus gegriffen wird.

### Bezugszeichenliste:

| | | | |
|---|---|---|---|
| 1 | Vorrichtung | 70 | Positioniereinrichtung |
| 2 | Profil | 71 | Positionierarm |
| 2a | Profilachse | 72 | Greifeinheit |
| 2b | Profilelement | 73 | Greifelement |
| 3 | Profilaufnahme | 74 | Saugereinheit |
| 10 | Bearbeitungseinrichtung, Schneideinrichtung | 75 | x-Richtung |
| | | 76 | y-Richtung |
| 28 | Steuereinrichtung | 77 | z-Richtung |
| 50 | Querschnittsprofil | 78 | Schwenkachse |
| 51,52 | Längsseite | 79 | Sensor |
| 56,57 | Kante | 85 | x-Verstellung |
| 58 | Aussparung, Nut | 86 | y-Verstellung |
| 59 | Greiffläche | 87 | z-Verstellung |
| 61 | Anschlag | 88 | Dreheinheit |
| 62 | Auflage, Unterlage | 100 | Bearbeitungszentrum, Zuschnittzentrum |
| 64 | Ebene | | |
| 65 | Längsrichtung | 101 | Materialpuffer |
| 66 | Querrichtung | 102 | Entnahmepuffer |
| 67 | Höhe | w1-w3 | Winkel |
| 68 | Profiltransport | | |
| 69 | Transporteinrichtung | | |

## Patentansprüche

1. Vorrichtung (1) zum Zuschneiden und/oder Bearbeiten von Profilen (2) insbesondere für den Tür-, Fenster-, Rolladenkästen- und Fassadenbau,
mit wenigstens einem Materialpuffer (101) und einer Profilaufnahme (3), auf welches die zu bearbeitenden Profile (2) aufgelegt werden und welches sich in einer Ebene (4) erstreckt, die durch eine Längsrichtung (5) und eine dazu quer ausgerichtete Querrichtung (6) definiert wird,
wobei die Profile (2) mit einem Profiltransport (7) über die Profilaufnahme (3) in Querrichtung (8) zu einem Anschlag (61) transportiert werden, um das Profil (2) von dem Anschlag (61) aus mit einer Transporteinrichtung (8) in Längsrichtung (65) definiert zu einer Bearbeitungseinrichtung (10) zu transportieren, an der das Profil (2) bearbeitet wird,
wobei die Profile (2) langestreckt ausgebildet sind und sich entlang einer Profilachse (2a) erstrecken und ein Querschnittsprofil (12) mit mehreren Längsseiten (51-54) entlang der Profilachse (2a) aufweisen,
wobei das Profil (2) bei Bedarf mit einer Positioniereinrichtung (70) gedreht und auf eine definierte Längsseite aufgestellt wird,
**dadurch gekennzeichnet,**
**dass** die Positioniereinrichtung (70) einen Positionierarm (71) mit wenigstens einer Greifeinheit (72) mit wenigstens einem Greifelement (73) zum Ergreifen des Profils (2) umfasst,
und **dass** der Positionierarm (71) in einer x-Richtung (75) und/oder in einer dazu quer ausgerichteten y-Richtung (76) und/oder in einer quer zur x-Richtung (75) und y-Richtung (76) ausgerichteten z-Richtung (77) verfahrbar ist.

2. Vorrichtung (1) nach Anspruch 1, wobei die Greifeinheit (72) um eine Schwenkachse (78) an dem Positionierarm (71) schwenkbar ist.

3. Vorrichtung (1) nach einem der vorhergehenden Ansprüche, wobei das Profil (2) von oben mit dem Positionierarm (71) ergreifbar ist und/oder wobei das Profil (2) von einer Längsseite (51, 52) ergreifbar ist.

4. Vorrichtung (1) nach einem der vorhergehenden Ansprüche, wobei der Positionierarm (71) wenigstens eine Saugereinheit (74) zum Ergreifen umfasst.

5. Vorrichtung (1) nach einem der vorhergehenden Ansprüche, wobei der Positionierarm (71) genau eine Greifeinheit (72) zum Ergreifen eines Profils (2) umfasst und wobei die Greifeinheit (72) insbesondere genau eine Saugereinheit (74) umfasst.

6. Vorrichtung (1) nach einem der vorhergehenden Ansprüche, wobei der Positionierarm (71) in der Längsrichtung (65) und/oder der Querrichtung (66) und/oder in der Höhe (67) verfahrbar ist.

7. Vorrichtung (1) nach einem der vorhergehenden Ansprüche,
wobei die x-Richtung (75) im Wesentlichen der Längsrichtung (65) und/oder wobei die y-Richtung (76) im Wesentlichen der Querrichtung (66) und/oder wobei die z-Richtung (77) im Wesentlichen der Richtung der Höhe (67) entspricht,
und wobei die x-Richtung (75), die y-Richtung (76)
und die z-Richtung (77) jeweils im Wesentlichen senkrecht zueinander ausgerichtet sind und wobei die x-Richtung und die y-Richtung im Wesentlichen horizontal ausgerichtet sind.

8. Vorrichtung (1) nach einem der vorhergehenden Ansprüche, wobei der Positionierarm (71) mit einer vertikalen Linearführung (87) verstellbar ist.

9. Vorrichtung (1) nach einem der vorhergehenden Ansprüche, wobei die Greifeinheit (72) an der Dreheinheit (88) aufgenommen ist, wobei die Dreheinheit (88) an der Linearführung (86) in Querrichtung aufgenommen ist, und wobei die Linearführung (86) in Querrichtung mit einer vertikalen Linearführung (87) verstellbar ist.

10. Vorrichtung (1) nach einem der vorhergehenden Ansprüche, wobei Fixierelemente umfasst sind, welche das Profil (2) an dem Anschlag (61) insoweit halten, dass das Profil (2) nicht zur Seite umfällt.

11. Vorrichtung (1) nach einem der vorhergehenden Ansprüche, wobei wenigstens eine Sägeeinrichtung (10) und/oder Fräseinrichtung (10) und/oder Schraubereinrichtung (10) zur Bearbeitung umfasst ist.

12. Vorrichtung (1) nach einem der vorhergehenden Ansprüche, wobei ein Entnahmepuffer (102) und ein Sensor (79) zur Positionserkennung des Profils (2) umfasst sind und wobei eine Steuereinrichtung (28) vorgesehen ist.

13. Verfahren (1) zum Zuschneiden und/oder Bearbeiten von Profilen (2) insbesondere für den Tür-, Fenster-, Rolladenkästen- und Fassadenbau,
wobei zu bearbeitende Profile auf eine Profilaufnahme (3) eines Materialpuffers (101) aufgelegt werden, wobei sich die Profilaufnahme (3) in eine Längsrichtung (65) und eine dazu quer ausgerichtete Querrichtung (66) erstreckt, welche eine Ebene (64) bilden,
wobei die Profile (2) mit einem Profiltransport (68) über die Profilaufnahme (3) in Querrichtung (66) zu einem Anschlag (61) transportiert werden, um das Profil (2) von dem Anschlag (61) aus mit einer Transporteinrichtung (69) in Längsrichtung (65) definiert zu einer Bearbeitungseinrichtung (10) zu transportieren, an der das Profil (2) dann bearbeitet wird,
wobei langestreckte Profile (2) eingesetzt werden, die sich entlang einer Profilachse (2a) erstrecken und ein Querschnittsprofil (50) mit mehreren Längsseiten (51, 52) entlang der Profilachse (2a) aufweisen,
**dadurch gekennzeichnet,**
**dass** das Profil (2) bedarfsweise mit wenigstens einem Greifelement (73) wenigstens einer Greifeinheit (72) eines Positionierarms (71) einer Positioniereinrichtung (70) ergriffen wird und mit der Positioniereinrichtung gedreht und auf eine definierte (andere) Längsseite (51, 52) gestellt wird,
und **dass** der Positionierarm (71) der Positioniereinrichtung (70) beim Drehen des Profils (2) wenigstens zweidimensional verstellt wird und wobei die Greifeinheit (72) des Positionierarms (71) beim Drehen des Profils (2) um eine Schwenkachse (78) an dem Positionierarm (71) verschwenkt wird.

14. Verfahren nach einem der vorhergehenden Ansprüche, wobei der Positionierarm (71) das Profil (2) beim Drehen derart führt, dass sich dieses über wenigstens einen wesentlichen Teil des Drehvorgangs und über einen erheblichen Teil der Länge des Profils (2) auf der Unterlage (62) abstützt und wobei beim Drehvorgang eines Profils (2) die Schwenkachse (78) des Drehvorgangs in wenigstens zwei Raumrichtungen verändert wird.

15. Verfahren nach dem vorhergehenden Anspruch, wobei beim Drehvorgang eines Profils die räumliche Position der Drehachse (78) gezielt derart verändert wird, dass das Profil (2) beim Drehen mit wenigstens einer Kante (56) auf der Unterlage bzw. dem Transportband und/oder mit wenigstens einer Kante (57) an dem Anschlag (61) anliegt.
